# FASCICULE DE BREVET EUROPEEN

(11) **EP 0 404 002 B1**
(45) Date de publication et mention de la délivrance du brevet: **14.09.1994**
(21) Numéro de dépôt: 90111425.6
(22) Date de dépôt: 18.06.1990
(51) Int. Cl.: H04Q 1/446, H04Q 1/46

(54) **Détecteur de signaux alternatifs basse fréquence notamment pour joncteur téléphonique**
Detektor für Niederfrequenz-Wechselstromsignale für eine Telefonverbindungsleitung
Detector for low frequency alternating signals for a telephone trench

(30) Priorité: 19.06.1989 FR 8908119
(43) Date de publication de la demande: 27.12.1990
(73) Titulaire: ALCATEL BUSINESS SYSTEMS, F-75008 Paris (FR)
(72) Inventeur: Bonvallet, André, F-92600 Asnieres (FR); Girard, Robert, F-92700 Colombes (FR); Perrein, Daniel, F-95370 Montigny Les Cormeilles (FR)
(74) Mandataire: Weinmiller, Jürgen

(56) Documents cités:
- AT-B- 338 881
- FR-A- 2 551 604
- IBM TECHNICAL DISCLOSURE BULLETIN, vol. 22, no. 9, février 1980, pages 4098-4099, New York, US; G. ORENGO: "Circuit for improving noise immunity in tone detection"
- IBM TECHNICAL DISCLOSURE BULLETIN, vol. 26, no. 8, janvier 1984, New York, US;Y. BONNET: "Tone detection circuit"

## Description

L'invention concerne un détecteur de signaux alternatifs basse fréquence, notamment pour la reconnaissance de signaux de tonalités, ou éventuellement de taxation, dans un joncteur de ligne réseau analogique d'une installation téléphonique de type privé selon le préambule de la revendication 1. Un tel détecteur est connu, par exemple à partir du document IBM TDB 1/1984, pages 4074 et 4075.

Les joncteurs de ligne réseau sont des équipements assurant le raccordement d'une installation, de type privé, notamment un commutateur ou un système d'intercommunication, à un central de rattachement appartenant usuellement à un réseau téléphonique, de manière à permettre la communication des postes ou terminaux téléphoniques rattachés à l'installation considérée avec ceux qui sont reliés au réseau sans être rattachés à cette installation.

Actuellement un grand nombre de lignes de réseau sont encore de type analogique et assurent la transmission des signaux de parole sous forme analogique par l'intermédiaire de deux fils dans une bande de fréquences audibles comprises entre trois cents et trois mille quatre cents hertz. Les deux fils de ligne sont aussi exploités pour transmettre des signalisations par exemple sous forme de signaux alternatifs, impulsionnels ou de durée relativement longue, de fréquences déterminées.

Or les installations téléphoniques de type privé, actuelles, tendent à assurer le plus souvent une commutation de type temporel qui conduit au codage des signaux de parole sous forme numérique et qui est bien adaptée à la transmission simultanée de signaux de voix et/ou de données par les mêmes supports selon les besoins présents des utilisateurs. Il est donc nécessaire de détecter ces signalisations alternatives pour les transcoder sous forme numérique à leur entrée dans l'installation amenée à les exploiter.

L'invention propose donc un détecteur de signaux alternatifs basse fréquence, notamment de tonalité ou de taxation et en particulier pour joncteur de ligne réseau analogique d'une installation téléphonique de type privé, qui soit fiable, peu coûteux et de taille réduite.

Ce détecteur est défini par la revendication 1.

L'invention sera précisée dans la description qui suit en liaison avec les figures répertoriées ci-dessous.

La figure 1 présente un schéma de principe d'un détecteur de tonalités.

La figure 2 présente un exemple de réalisation du détecteur de tonalités schématisé en figure 1.

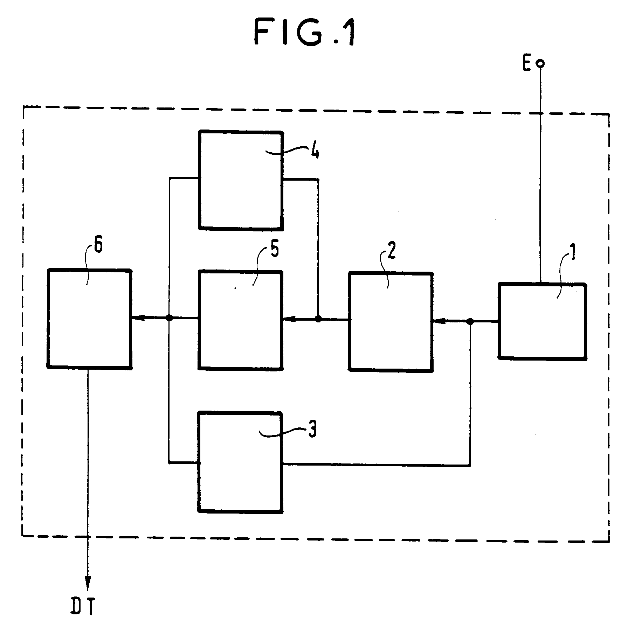

Le détecteur de tonalités schématiquement présenté en figure 1 est par exemple destiné à capter une tonalité d'invitation à numéroter qui est transmise à son entrée E sous forme d'un signal sinusoïdal situé dans la bande de fréquences comprise entre 300 et 500 Hz.

Ce détecteur de tonalités comporte un amplificateur 1 qui est connecté à la borne E.

La sortie de l'amplificateur 1 est reliée d'une part en entrée d'un filtre passe-bande 2, d'autre part en entrée d'une première cellule de redressement-filtrage 3.

Le filtre passe-bande 2 est par exemple un simple filtre du deuxième ordre qui amplifie les signaux situés dans la bande comprise entre 300 et 500 Hz et atténue les signaux dont la fréquence est supérieure à 600 Hz ou inférieure à 160 Hz.

Une seconde cellule de redressement-filtrage 4 est connectée en sortie du filtre passe-bande 2, elle permet d'effectuer une comparaison entre les niveaux des signaux respectivement présents en entrée et en sortie du filtre 2, en liaison avec la première cellule 3.

La présence d'un signal de sortie de filtre ayant un niveau clairement supérieur au niveau du signal pris en entrée est considérée comme caractéristique de la présence de la tonalité à détecter, à partir du moment où le niveau de ce signal en sortie est supérieur à un niveau minimal déterminé qui est fixé par un détecteur de présence à seuil 5 connecté en sortie du filtre passe-bande 2, comme la seconde cellule 4.

Les signaux de sortie des deux cellules de redressement-filtrage 3 et 4 sont appliqués à un comparateur 6 qui fournit un signal logique DT, de type binaire, caractéristique de la présence ou non d'une tonalité, à partir du moment où il reçoit un signal de commande fourni par le détecteur à seuil 5, dès que ce dernier détecte un signal de niveau suffisant à son entrée.

Cet agencement permet d'éviter la mise en oeuvre d'un filtre très sélectif, donc d'ordre élevé et par conséquent coûteux.

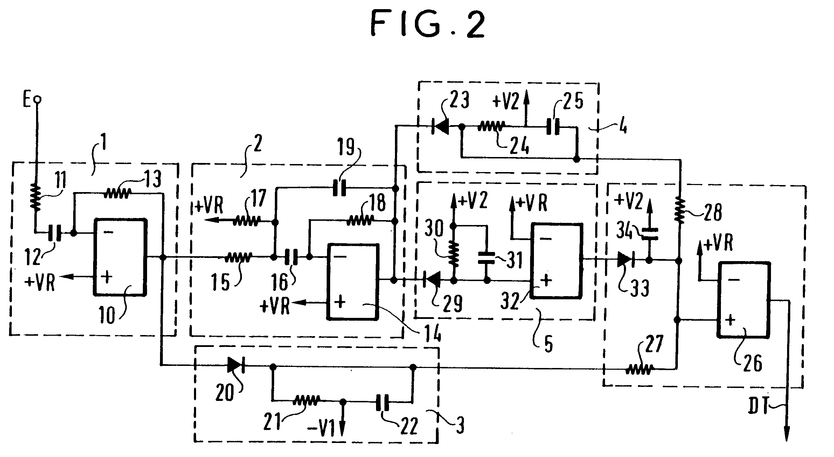

Un exemple de réalisation du détecteur de tonalités de la figure 1 est proposé en figure 2.

L'amplificateur 1 de la figure 2 est constitué par un amplificateur opérationnel 10 relié par son entrée inverseuse à l'entrée E, via une résistance 11 et une capacité 12; l'entrée non-inverseuse de cet amplificateur opérationnel est reliée à un potentiel de référence +VR, médian, permettant de profiter de toute la dynamique disponible et d'éviter l'écrêtage du signal reçu.

Une résistance 13 reboucle classiquement la sortie de cet amplificateur opérationnel 10 sur son entrée inverseuse. Le filtre passe-bande 2, centré sur la fréquence de la tonalité attendue, est organisé autour d'un amplificateur opérationnel 14 dont l'entrée inverseuse est reliée à la sortie de l'amplificateur 10, via une résistance 15 en série avec un condensateur 16, l'entrée non-inverseuse étant au potentiel +VR.

Le point commun à la résistance 15 et au condensateur 16 est lui même relié au potentiel +VR par une résistance 17, la sortie de l'amplificateur 14 réagit sur son entrée inverseuse via d'une part une résistance 18, d'autre part, un condensateur 19 relié au point commun aux résistances 15, 17 et au condensateur 16.

La première cellule 3 est reliée à la sortie de l'amplificateur 10 par une diode 20 connectée à cette sortie par son anode; elle comporte une grande résistance 21 et un condensateur 22 en parallèle entre la cathode de la diode 20 et un potentiel négatif d'alimentation -V1, ceci permet un stockage des valeurs maximales des alternances positives du signal appliqué à l'entrée du filtre passe-bande.

La seconde cellule 4 est reliée en sortie de l'amplificateur 14 par la diode 23 dont la cathode est reliée à cette sortie, elle comporte une résistance 24 et un condensateur 25 en parallèle entre l'anode de la diode 23 et un potentiel positif d'alimentation +V2. Cette seconde cellule permet le stockage des valeurs maximales négatives du signal présent en sortie du filtre passe-bande.

Les signaux en sortie des deux cellules 3, 4 sont appliqués à l'entrée non-inverseuse d'un amplificateur opérationnel 26, via deux grandes résistances 27, 28 desservant respectivement chacune une cellule. L'entrée inverseuse de l'amplificateur 26 est reliée au potentiel +VR.

Le détecteur de présence à seuil 5, comporte lui aussi une cellule redressement-filtrage composée d'une diode 29 dont la cathode est reliée à la sortie de l'amplificateur 14, ainsi qu'une résistance 30 et un condensateur 31 en parallèle entre l'anode de la diode 29 et le potentiel +V2. La sortie de cette cellule qui est le point commun à l'anode de la diode 29, à la résistance 30 et au condensateur 31, est reliée à l'entrée non-inverseuse d'un amplificateur opérationnel 32 dont l'entrée inverseuse est au potentiel +VR.

L'amplificateur 32 est relié par une diode 33 à l'entrée non-inverseuse de l'amplificateur 26, de même que les résistances 27 et 28 placées en sortie des cellules 3 et 4. Tant que le signal en sortie du filtre passe-bande est inférieur à une valeur de seuil fixée par la diode 29, le signal en sortie de l'amplificateur 26 est fixé par celui de l'amplificateur 32 et se traduit par un signal binaire opposé à celui qui est caractéristique de la présence d'une tonalité sur la liaison DT. Lorsque le signal en sortie de filtre passe-bande, c'est-à-dire en sortie d'amplificateur 14, dépasse le niveau de seuil fixé par la diode, l'amplificateur 32 bloque la diode 33 en inverse et le signal appliqué à l'entrée non-inverseuse de l'amplificateur 26 est la somme des signaux de polarités opposées fournis par les cellules 3 et 4, via les résistances 27 et 28. Un signal binaire caractéristique de détection de tonalité est alors produit sur la liaison DT si la valeur des signaux en sortie des résistances 27, 28 traduit l'existence d'un signal filtré d'amplitude supérieure à celle du signal appliqué en entrée de filtre.

## Revendications

1. Détecteur de signaux alternatifs basse fréquence, notamment pour la reconnaissance de signaux de tonalité dans un joncteur de ligne réseau analogique d'une installation téléphonique de type privé, comportant une entrée qui est reliée d'une part en entrée d'un filtre passe-bande (2), d'autre part en entrée d'une première cellule de redressement-filtrage (3), une seconde cellule de redressement-filtrage (4) connectée en sortie du filtre passe-bande, et un comparateur (6) recevant les signaux d'entrée et de sortie du filtre (2), caractérisé en ce qu'un détecteur de présence à seuil (5) est aussi connecté en sortie du filtre passe-bande (2) comme la seconde cellule (4) et, lorsqu'il détecte un signal de niveau supérieur au seuil en sortie dudit filtre, autorise une comparaison par ledit comparateur (6), la présence en sortie du filtre passe-bande (2), d'un signal d'amplitude supérieure à celle du signal en entrée étant caractéristique de la présence du signal alternatif attendu et se traduisant alors par un signal du type binaire en sortie du comparateur.

2. Détecteur de signaux alternatifs basse fréquence, selon la revendication 1, caractérisé en ce qu'il comporte en entrée un amplificateur (1) qui est constitué par un amplificateur opérationnel (10) attaqué par le signal à examiner sur son entrée inverseuse, via une résistance (11) et une capacité (12), l'entrée non-inverseuse de cet ampificateur opérationnel étant reliée à un potentiel de référence (+VR), médian pour profiter de toute la dynamique disponible et éviter l'écrêtage du signal reçu, une résistance (13) rebouclant la sortie de cet amplificateur opérationnel sur son entrée inverseuse.

3. Détecteur de signaux alternatifs basse fréquence, selon la revendication 1, caractérisé en ce que le filtre passe-bande (2) est un filtre du deuxième ordre, organisé autour d'un amplificateur opérationnel (14) dont l'entrée inverseuse est attaquée par la sortie de l'amplificateur (1), via une résistance (15) en série avec un condensateur (16), et dont la sortie est rebouclée sur l'entrée, via d'une part une résistance (18) et d'autre part un condensateur (19) relié au point commun à la résistance (15) et au condensateur (16).

4. Détecteur de signaux alternatifs basse fréquence, selon la revendication 1, caractérisé en ce que les cellules de redressement-filtrage (3, 4) comportent chacune une résistance (21 ou 24) et un condensateur (22 ou 25) en parallèle, entre pour la première, la cathode d'une diode (20) reliée par son anode à la sortie de l'amplificateur (1) et un potentiel négatif d'alimentation (-V1), et entre, pour la seconde, un potentiel positif d'alimentation (+V2) et l'anode d'une diode (23) reliée par sa cathode à la sortie du filtre passe-bande (2).

5. Détecteur de signaux alternatifs basse fréquence, selon la revendication 1, caractérisé en ce que le détecteur de présence à seuil (5) comporte une résistance (30) et un condensateur (31) en parallèle entre un potentiel positif d'alimentation (+V2) et l'anode d'une diode (29) reliée par sa cathode à la sortie du filtre passe-bande (2), le point commun à l'anode de la diode (29), à la résistance (30) et au condensateur (31), étant relié à l'entrée non-inverseuse d'un amplificateur opérationnel (32) de fixation de valeur de seuil dont l'entrée inverseuse est portée à cet effet à une valeur positive (+VR) correspondant au potentiel médian de référence.

6. Détecteur de signaux alternatifs basse fréquence, selon la revendication 1, caractérisé en ce que le comparateur (6) est constitué par un amplificateur opérationnel (26)) dont l'entrée inverseuse est reliée au potentiel positif médian (+VR) alors que l'entrée non-inverseuse est connectée d'une part, via respectivement une résistance (27 ou 28) en sortie de chacune des cellules de redressement-filtrage, d'autre part en sortie du détecteur de présence (5), via une diode (33) montée en direct, cette diode ayant sa cathode reliée au potentiel positif (+V2) par un condensateur (34).

## Patentansprüche

1. Detektor für niederfrequente Wechselstromsignale, insbesondere zu Erkennung von akustischen Signalen in einem Leitungsanschluß eines analogen Netzes an eine Nebenstellentelefonanlage, wobei der Eingang des Detektors einerseits an den Eingang eines Bandfilters (2) und andererseits an den Eingang einer ersten Gleichrichtungs- und Filterzelle (3) angeschlossen ist, während eine zweite Gleichrichtungs- und Filterzelle (4) an den Ausgang des Bandfilters angeschlossen ist und ein Komparator (6) die Eingangs- und Ausgangssignale des Filters (2) zugeführt erhält, dadurch gekennzeichnet, daß ein Schwellwertdetektor (5) an denselben Ausgang des Bandfilters (2) wie die zweite Zelle (4) angeschlossen ist und bei Erfassung eines Signals mit einem Pegel oberhalb eines Schwellwerts am Ausgang dieses Filters einen Vergleich im Komparator (6) ermöglicht, wobei das Vorliegen eines Signals am Ausgang des Bandfilters (2) mit einer größeren Amplitude als am Eingang für das Vorliegen des erwartenden Wechselstromsignals charakteristisch ist und zu einem binären Signal am Ausgang des Komparators führt.

2. Detektor für Niederfrequenz-Wechselstromsignale gemäß Anspruch 1, dadurch gekennzeichnet, daß er am Eingang einen Verstärker (1) in Form eines Operationsverstärkers (10) enthält, der das zu untersuchende Signal an seinem negativen Eingang über einen Widerstand (11) und einen Kompensator (12) zugeführt erhält, während der positive Eingang dieses Operationsverstärkers an ein mittleres Bezugspotential (+VR) angeschlossen ist, um die ganze verfügbare Dynamik auszunützen und eine Begrenzung des Empfangssignals zu vermeiden, wobei ein Widerstand (13) den Ausgang dieses Operationsverstärkers an seinen negativen Eingang rückschleift.

3. Detektor für Niederfrequenz-Wechselstromsignale nach Anspruch 1, dadurch gekennzeichnet, daß das Bandfilter (2) ein Filter zweiter Ordnung mit einem Operationsverstärker (14) ist, dessen negativer Eingang mit dem Ausgang des Verstärkers (1) über einen Widerstand (15) in Reihe mit einem Kondensator (16) verbunden ist und dessen Ausgang an den Eingang einerseits über einen Widerstand (18) und andererseits über einen Kondensator (19) rückgeschleift ist, der mit dem gemeinsamen Punkt des Widerstands (15) und des Kondensators (16) verbunden ist.

4. Detektor für Niederfrequenz-Wechselstromsignale nach Anspruch 1, dadurch gekennzeichnet, daß die Gleichrichtungs- und Filterzellen (3, 4) je einen Widerstand (21 oder 24) und einen Kondensator (22 oder 25) in Parallelschaltung zwischen der Kathode einer mit ihrer Anode an den Ausgang des Verstärkers (1) angeschlossenen Diode (20) und einem negativen Speisepotential (-V1) hinsichtlich der ersten Zelle bzw. zwischen einem positiven Speisepotential (+V2) und der Anode einer mit ihrer Kathode an den Ausgang des Bandfilters (2) angeschlossenen Diode (23) hinsichtlich der zweiten Zelle angeschlossen ist.

5. Detektor für Niederfrequenz-Wechselstromsignale nach Anspruch 1, dadurch gekennzeichnet, daß der Schwellwertdetektor (5) einen Widerstand (30) und einen Kondensator (31) in Parallelschaltung zwischen einem positiven Speisepotential (+V2) und der Anode einer mit ihrer Kathode an den Ausgang des Bandfilters (2) angeschlossenen Diode (29) aufweist, wobei der gemeinsame Punkt der Anode der Diode (29), des Widerstands (30) und des Kondensators (31) mit dem positiven Eingang eines Operationsverstärkers (32) zur Festlegung des Schwellwerts verbunden ist, dessen negativer Eingang hierzu einen positiven Spannungswert (+VR) entsprechend dem mittleren Bezugspotential empfängt.

6. Detektor von Niederfrequenz-Wechselstromsignalen nach Anspruch 1, dadurch gekennzeichnet, daß der Komparator aus einem Operationsverstärker (26) besteht, dessen negativer Eingang mit dem mittleren positiven Potential (+VR) verbunden ist, während der positive Eingang einerseits über einen Widerstand (27 oder 28) mit dem Ausgang je einer der Gleichrichtungs- und Filterzellen und andererseits mit dem Ausgang des Schwellwertdetektors (5) über eine in Durchlaßrichtung geschaltete Diode (33) angeschlossen ist, wobei diese Diode mit ihrer Kathode an das positive Potential (+V2) über einen Kondensator (34) angeschlossen ist.

## Claims

1. Low-frequency alternating current signal detector, in particular for recognizing tone signals in an analogue subscriber line interface circuit of a private telephone installation having an input connected to the input of a bandpass filter (2) and to the input of a first rectifier-filter (3), a second rectifier-filter (4) connected to the output of the bandpass filter and a comparator (6) receiving the input and output signals of the filter (2), characterized in that a threshold presence detector (5) is also connected to the output of the bandpass filter (2) like the second rectifier-filter (4) and, when it detects a signal at a level higher than the threshold at the output of said filter, enables comparison by said comparator (6), the presence at the output of the bandpass filter (2) of a signal with an amplitude higher than that of the signal at the input being characteristic of the presence of the expected alternating current signal and producing a binary signal at the comparator output.

2. Low-frequency alternating current signal detector according to claim 1 characterized in that it includes at its input an amplifier (1) constituted by an operational amplifier (10) driven by the signal to be examined at its inverting input via a resistor (11) and a capacitor (12), the non-inverting input of this operational amplifier being connected to a medium-amplitude reference voltage (+VR) to use all of the available dynamic range and avoid clipping of the received signal, a resistor (13) looping the output of this operational amplifier to its inverting input.

3. Low-frequency alternating current signal detector according to claim 1 characterized in that the bandpass filter (2) is a second order filter based on an operational amplifier (14) whose inverting input is driven by the output of the amplifier (1) via a resistor (15) in series with a capacitor (16) and whose output is looped to the input via a resistor (18) and a capacitor (19) connected to the common point of the resistor (15) and the capacitor (16).

4. Low-frequency alternating current signal detector according to claim 1 characterized in that the rectifier-filters (3, 4) each include a resistor (21 or 24) and a capacitor (22 or 25) in parallel, between, in the case of the first, the cathode of a diode (20) whose anode is connected to the output of the amplifier (1) and a negative supply voltage (-V1) and, in the case of the second, a positive supply voltage (+V2) and the anode of a diode (23) whose cathode is connected to the output of the bandpass filter (2).

5. Low-frequency alternating current signal detector according to claim 1 characterized in that the threshold presence detector (5) includes a resistor (30) and a capacitor (31) in parallel between a positive supply voltage (+V2) and the anode of a diode (29) whose cathode is connected to the output of the bandpass filter (2), the common point of the anode of the diode (29), the resistor (30) and the capacitor (31) being connected to the non-inverting input of an operational amplifier (32) setting a threshold value whose inverting input is to this end connected to a positive voltage (+VR) corresponding to the medium-amplitude reference voltage.

6. Low-frequency alternating current signal detector according to claim 1 characterized in that the comparator (6) includes an operational amplifier (26) whose inverting input is connected to the medium-amplitude positive voltage (+VR) and whose non-inverting input is connected to the output of each rectifier-filter via a respective resistor (27 or 28) and to the output of the presence detector (5) via a forward-biased diode (33), the cathode of this diode being connected to the positive voltage (+V2) by a capacitor (34).
